# EUROPEAN PATENT APPLICATION

(11) **EP 4 155 018 A1**
(43) Date of publication of application: **29.03.2023**
(21) Application number: 21198196.4
(22) Date of filing: 22.09.2021
(51) Int. Cl.: B23G 5/18

(54) **THREAD MILLING CUTTING TOOL**

(71) Applicant: WALTER AG, 72072 Tübingen (DE)
(72) Inventor: BIHRER, Martin, 72072 Tübingen (DE); KUDERER, Daniel, 72072 Tübingen (DE); HELLSTERN, Martin, 72072 Tübingen (DE)
(74) Representative: Sandvik

(57) **Abstract**

The present invention relates to a thread milling cutting tool for metal cutting comprising an elongated main body, which main body (1) comprises a cutting section (5) which extends axially rearward from a front end (2) and comprises a plurality of teeth (7). The plurality of teeth (7, 22) comprises at least a first set (6) of circumferentially spaced teeth (7), wherein each tooth (7) of the at least first set has a same, first axial distance (8) to the front end, and a clearance surface (14) of each tooth (7) has a radial clearance angle. The clearance surface (14) of each tooth (7) of the at least first set (6) of teeth comprises a rotationally leading portion (16) and a rotationally trailing portion (17), wherein the leading portion (16) extends from and rotationally behind the cutting edge (15), and the radial clearance angle (α) of the leading portion (16) is smaller than the radial clearance angle (β) of the trailing portion (17).

## Description

### Technical field

The present invention relates to a thread milling cutting tool for metal cutting, preferably for cutting internal threads in a metal workpiece.

### Background

Metal components comprising internal threads are used in many various fields, such as for example in screw joints. Consequently, a variety of different cutting tools for providing a metal workpiece with an internal thread have been developed, and in particular, thread milling cutting tools. Such thread milling tools are conventionally provided with cutting teeth that are located circumferentially spaced in axial planes of an elongated body. A thread milling cutting tool typically is used for cutting an internal thread in a pre-drilled hole in a workpiece, wherein the diameter of the thread milling cutting tool is smaller than the diameter of the hole. During operation, after the thread milling cutter has been inserted into the hole, it is rotated around the central axis of the tool and moved along the hole wall around the center axis of the hole. At the same time, the thread milling cutter is fed radially and axially into the hole wall.

A problem with prior art thread milling cutting tools is that, in some applications, the tools are prone to vibrations. This may cause insufficient surface finish or even damage to the tool.

### Summary

It is an object of the present invention to mitigate the shortcomings of the prior art and to provide a thread milling cutting tool for metal cutting that is less prone to vibrations.

This object is achieved according to the invention by means of a thread milling cutting tool according to claim 1.
The present invention relates to a thread milling cutting tool for metal cutting comprising an elongated main body, which main body
- has a front end, a rear end and a central longitudinal axis extending from the front end to the rear end,
- is configured rotatable in a direction of rotation around the central longitudinal axis, and
- comprises a cutting section which extends axially rearward from the front end and comprises a plurality of teeth,
   wherein
- each tooth of the plurality of teeth comprises a rake surface, a clearance surface, and a cutting edge at the intersection of the rake surface and the clearance surface, wherein
   - the clearance surface has a radial clearance angle, and
- the plurality of teeth comprises at least a first set of circumferentially spaced teeth, wherein each tooth of the at least first set has a same, first axial distance to the front end,
   and wherein
   the clearance surface of each tooth of the at least first set of teeth comprises a rotationally leading portion and a rotationally trailing portion, wherein
- the leading portion extends from and rotationally behind the cutting edge, and
- the radial clearance angle of the leading portion is smaller than the radial clearance angle of the trailing portion.

Generally, when designing a thread milling cutting tool, a large clearance angle is desirable for obtaining a tool that is more easy cutting. However, a large clearance angle tends to cause the tool to dig deep into the workpiece material so that it cuts uneven and starts to vibrate. A tool can be designed with a small clearance angle to avoid this effect, however, tools with small clearance angles often are subjected to high cutting and friction forces, which may cause the tool to diverge from the intended path.

According to the present invention, the inventive clearance surface is designed to improve stability and to overcome disadvantages of prior art tools. The inventive tool comprises a first set of teeth having a clearance surface extending rotationally behind the cutting edge. The clearance surface of each tooth in the first set has a smaller radial clearance angle directly behind the cutting edge in a leading portion than further rotationally behind the cutting edge, in a trailing portion. Thanks to the smaller radial clearance angle at the cutting edge, support of the cutting tool is improved, and thanks to the increased radial clearance angle in the trailing portion, pressure from the work piece against the tool is kept low. Thereby a thread milling cutting tool is obtained that is less prone to vibrations and that is more stable.

A thread milling cutting tool according to the present invention is suitable for cutting an internal thread in a metal workpiece by removing material from an internal surface in the workpiece. Furthermore, the present thread milling cutting tool is suitable to be operated in a pre-drilled hole in a workpiece, wherein the thread milling cutting tool has a smaller outer diameter than the inner diameter of the pre-drilled hole.

The thread milling cutting tool comprises an elongated main body having a front end, a rear end and a central longitudinal axis extending from the front end to the rear end. The thread milling cutting tool is configured rotatable in a direction of rotation around the central longitudinal axis. Portions of the tool are rotationally leading or trailing as seen in the direction of rotation around the central longitudinal axis. A cross section of the tool is a section perpendicular to the longitudinal axis unless stated otherwise. Preferably, the main body has an overall cylindrical shape, wherein the cross section has an overall circular shape.

During operation, the tool is typically inserted into a pre-drilled hole in a workpiece and rotated around the central longitudinal axis. When cutting, the tool is in addition moved along the hole wall around a center axis of the hole, while at the same time being fed radially into the hole wall and advanced axially forward or rearward.

Preferably, the workpiece is of metal such as an ISO P material. The workpiece may for example be a component that is to be attached to another component by a fastener with an external thread, for example a screw, which is screwed into the threaded hole of the component.

The thread milling cutting tool has a cutting section at a front end. Preferably, the cutting section is an axial length portion of the elongated body. According to an embodiment, the thread milling cutting tool comprises further sections, such as a coupling section at a rear end for providing a mounting interface. Optionally, the mounting interface is designed to be coupled to a rotatable machine spindle or to an adapter for a rotatable machine spindle. Preferably, the coupling section is a shaft that is integral with the main body.

According to an embodiment, wherein the thread milling cutting tool is configured for cutting a thread with a nominal thread diameter (D) at a maximal depth (L). Optionally, the maximal depth corresponds to the length of the cutting section, or the cutting section and an intermediate section, which together may form a neck section of the tool. Preferably, a ratio of the maximal depth (L) and the nominal thread diameter (L/D) is at least 1,5, more preferably at least 2,5, and more preferably at least 3. Since the design of the clearance surface of the thread milling cutting tool achieves a considerable reduction in vibration, it is especially advantageous for long tools. Preferably the ratio is at most 5 and more preferably at most 4. In some applications, a longer tool may not be sufficiently steady even though it vibrates considerably less than a prior art tool.

The cutting section comprises a plurality of teeth including at least a first set of teeth. Each tooth of the first set of teeth protrude from the circumference of the cutting section in order to each present a cutting edge at an intersection of a rake surface and a clearance surface. Optionally, each tooth is formed as a protruding polyhedron, such as for example cubes, cylinders or prisms. Preferably, each tooth is formed as a ridge.

Each tooth of the first set of teeth have a same, first axial distance to the front end of the thread milling cutting tool.

According to an embodiment, all teeth of the first set of teeth are evenly spaced around the circumference of the thread milling cutting tool. In other words, the circumferential distance between two consecutive teeth is the same for all teeth of the first set of teeth. According to another embodiment, the circumferential distance between two consecutive teeth of the first set differ for some or all teeth in the set. Preferably, all teeth of the first set of teeth have the same circumferential length, wherein, preferably, the circumferential extension of each tooth is at a constant axial distance to the front end. Preferably, all teeth in the first set of teeth are identical.

Optionally, the cutting section comprises axially extending chip flutes arranged in the peripheral, radially outward facing surface of the cutting section of the main body. Optionally, the chip flutes are arranged parallel with the central longitudinal axis, inclined with respect to the central axis of rotation, or along a curve, for example a helix. A chip flute that is parallel with central longitudinal axis, also referred to as an axially straight chip flute, is advantageous for breaking up chips into smaller pieces. An inclined or helical chip flute is advantageous for transporting chips rearward along the tool and for obtaining an easy-cutting tool.

The first set of teeth comprises at least two teeth. Optionally, the thread milling cutting tool comprises at least 2 and at most10, such as for example 4, chip flutes and a corresponding number of circumferentially spaced teeth in the first set. A low number of chip flutes and teeth, for example 2, provides a tool with low cutting forces. A high number of chip flutes and teeth, for example 10, provides a tool that is operable with short cycle times, but is subjected to higher bending forces.

Preferably, each tooth of the first set of teeth is formed as a ridge extending a circumferential distance. The profile of the ridge shaped tooth may be seen as a cross section perpendicular to the circumferential extension of the ridge, for example a longitudinal section of the thread milling cutting tool. According to an embodiment, the ridge shaped teeth each have an axially forward facing flank, an axially rearward facing flank and a crest connecting the two flanks. At a rotationally leading end, the ridge has a leading face which includes the rake surface. Optionally, the clearance surface is formed by the crest only or by in addition radially outer parts or the entire flanks. The cutting edge is formed at the intersection of the leading face with the flanks and crest. The cutting edge extends along the crest and along a portion of one and/or both flanks, optionally along the entire flanks.

The clearance surface has a radial clearance angle. As seen in a cross section perpendicular to the longitudinal axis of the thread milling cutting tool, the radial clearance angle is formed by a tangent to the clearance surface and a line perpendicular to the radius at the cutting edge.

The clearance surface of each tooth of the first set of teeth has a rotationally leading portion and a rotationally trailing portion. The leading portion extends rotationally rearward from behind the cutting edge and the trailing portion follows rotationally behind the leading portion. The radial clearance angle of the leading portion is smaller than the radial clearance angle of the trailing portion. Preferably, the radial clearance angle of the leading portion is at least 1° and less than 5°, and more preferably at least 2° and at most 3°. Clearance angles within these ranges provide the desired support for the tool at the cutting edge, so that vibrations can be kept sufficiently low for most applications. A smaller clearance angle of the leading portion may cause the thread milling cutting tool to be too heavy cutting for some applications. A larger clearance angle of the leading portion may not provide sufficient support in some applications or may cause the cutting edge to dig too deep into the work pieces so that the tool does not run smoothly.

The radial clearance angle of the trailing portion is preferably at least 5° and at most 10°, and more preferably at least 6° and at most 7°. Clearance angles of the trailing portions within these ranges ensure that there is enough space further behind the cutting edge and leading portion to avoid undesired pressing of the tool, so that vibrations can be kept sufficiently low for most applications. A smaller clearance angle of the trailing portion may, in some applications, subject the thread milling cutting tool to high pressure from the work piece which may cause the tool to diverge from the intended path. This may in turn cause the cut thread to become slightly conical instead of cylindrical. A larger clearance angle may be detrimental to the strength of the tooth.

Preferably, the radial clearance angle of both the leading portion and the trailing portion is constant. Preferably, all positions of the leading portion have the same radial clearance angle. Preferably, all positions of the trailing portion has the same clearance angle, which however is different and larger than the radial clearance angle in position of the leading portion. Thereby the production of the thread milling cutting tool is facilitated.

As seen in a cross section perpendicular to the longitudinal axis of the thread milling cutting tool, a tooth in the first set of teeth extends in the circumferential direction over a circle sector of a circle with the central longitudinal axis as center. Preferably, the clearance surface has a circumferential extension in a circle sector delimited by the cutting edge and a trailing end of the tooth. Correspondingly, the leading portion of the clearance surface has a circumferential extension in a circle sector delimited by the cutting edge and a trailing end of the leading portion. The circumferential extension of for example a tooth, a clearance surface or a portion of a clearance surface may be defined as the arc length of circle sector. Preferably, as seen in a cross section, the leading portion has a circumferential extension in a circle sector of at least 1° and at most 15°, and more preferably in a circle sector of at least 5° and at most 10°. A leading portion that extends over a sector of a smaller angle may not provide sufficient support for some applications. A leading portion that extends over a sector of a larger angle may in some applications cause the thread milling cutting tool to be too heavy cutting.

According to an embodiment with chip flutes, each tooth of the first set of teeth is rotationally trailing one respective associated chip flute. The leading face of the tooth, which includes the rake surface, is part of a chip flute surface of the associated leading chip flute. For example a ridge shaped tooth extends over a sector delimited by a chip flute that is rotationally directly in front of the tooth and a chip flute that is directly behind the tooth.

Optionally, the trailing portion extends rotationally forward from a trailing end of each tooth of the first set of teeth or follows directly behind the leading portion. Optionally, the clearance surface comprises one or several intermediate portions, or consists of the leading and the trailing portion only. A clearance surface that consists of the leading and the trailing portion only, advantageously both provides optimal, necessary support at the cutting edge end and optimal, necessary space further rotationally behind the cutting edge. In such embodiments, the rotationally trailing end of the leading portion is the rotationally leading end of trailing portion. In a corresponding embodiment with chip flutes, the trailing portion has a circumferential extension in a circle sector delimited by the trailing end of the leading portion and the leading edge of the trailing chip flute.

Optionally, the plurality of teeth comprises several sets of circumferentially spaced teeth, wherein each tooth of each set has the same axial distance to the front end as all other teeth of the same set, and a different axial distance to the front end as all the teeth of the other sets. In other words, the thread milling cutting tool comprises rows of circumferentially spaced teeth, wherein all teeth in each row belong to one respective set. For example, the thread milling cutting tool comprises 1 - 3 sets of circumferentially spaced teeth. One such type of thread milling cutting tools is commonly called orbital tool with neck. The inventive clearance surface may also be implemented in a classic thread mill comprising 10 - 20 sets of circumferentially spaced teeth. The number of sets may be adjusted according to ratio between the maximal free length and a nominal thread diameter (L/D) of the tool.

Optionally, the teeth of the sets are aligned in axial columns, for example in columns that are parallel with the central longitudinal axis, inclined with respect to the central longitudinal axis, or along a curve, for example a helix.

According to an embodiment comprising several sets of circumferentially spaced ridge shaped teeth, each tooth in a first set of teeth includes also a portion of the root axially directly forward and rearward thereof. As seen in the axial direction, each tooth may extend from the center of the forward root over the crest and to the center of the rearward root. As seen in the axial direction, the root portion that is axially rearward of a tooth in the first set connects to an axially forward root portion of an axially next following tooth in an axially next following set. At a rotationally leading end, the leading face of such teeth extend radially inward of the root. Furthermore, the cutting edge extends along the root as well as along the crest and both flanks. Thus, the tools according to the embodiment comprises teeth that form axially continuous cutting edges. The number of axially continuous cutting edges correspond to the number of teeth in each set. Correspondingly, also the clearance surface covers in addition to the crest and entire flanks also the root. The clearance surface thus forms a surface that is continuous in the axial direction. In the circumferential direction, the clearance surface is interrupted by the chip flutes.

Optionally, the teeth of different sets are different, or, all teeth of all sets are identical. Preferably all teeth of the same set are identical. Specifically, the clearance surface of all teeth of all sets may have the same clearance angle in the leading portion and in the trailing portion. In other embodiments, the teeth of different sets may differ. According to an embodiment, the clearance angle of the leading and or trailing portion of teeth from different sets differ. For example, the clearance angle of the leading portion may be smaller for teeth of a set that is closer to the front end than for teeth of another set that is closer to the rear end. For example, the leading portion of the teeth of a set that is closer to the front end may extend over a circle sector that has a larger angle than a corresponding circle section of the leading portion of the teeth of a set that is closer to the rear end.

Optionally, the plurality of teeth of the thread milling cutting tool comprises other types of than circumferentially spaced teeth included in sets at axial levels, such as for example front teeth protruding from a front end surface. In an embodiment, the front teeth have radially extending cutting edges that are designed to cut in an axial direction. A thread milling cutting tool with front end teeth may be operated to cut both a hole and an internal thread in the hole of a workpiece at the same time.

### Brief description of the drawings

In the following, example embodiments will be described in greater detail and with reference to the accompanying drawings, in which:
Fig. 1 is a side view of a first embodiment of the thread milling cutting tool according to the present invention, wherein an axial rear coupling section is only partially shown;
Fig. 2 is a front end view of the first embodiment;
Fig. 3 is an enlarged view corresponding to Fig. 2 of a tooth of a first set of teeth of the first embodiment;
Fig. 4 is a diagram showing curves representing an embodiment of the inventive clearance surface and a prior art clearance surface in a reference circle; and
Figs. 5 - 7 show alternative embodiments of the thread milling cutting tool according to the present.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

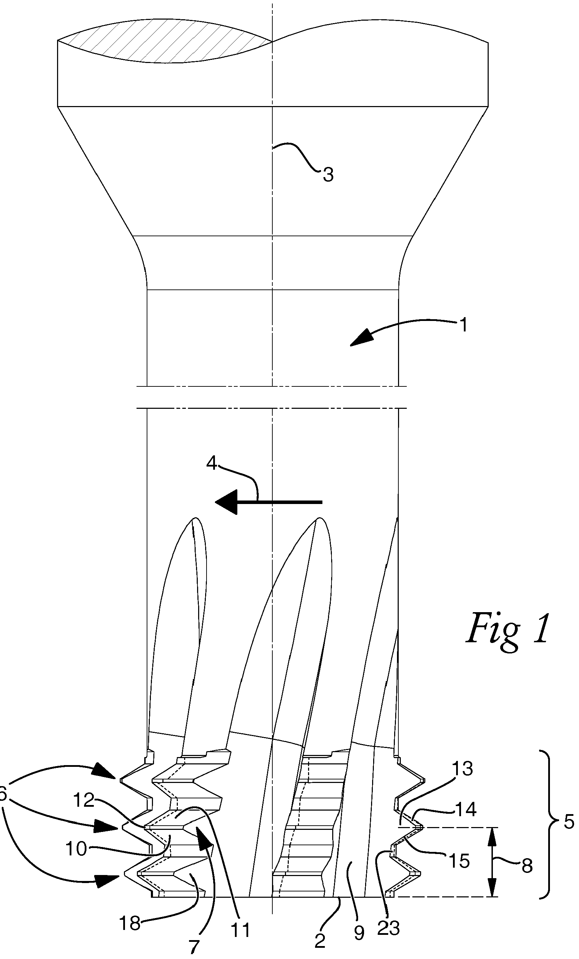

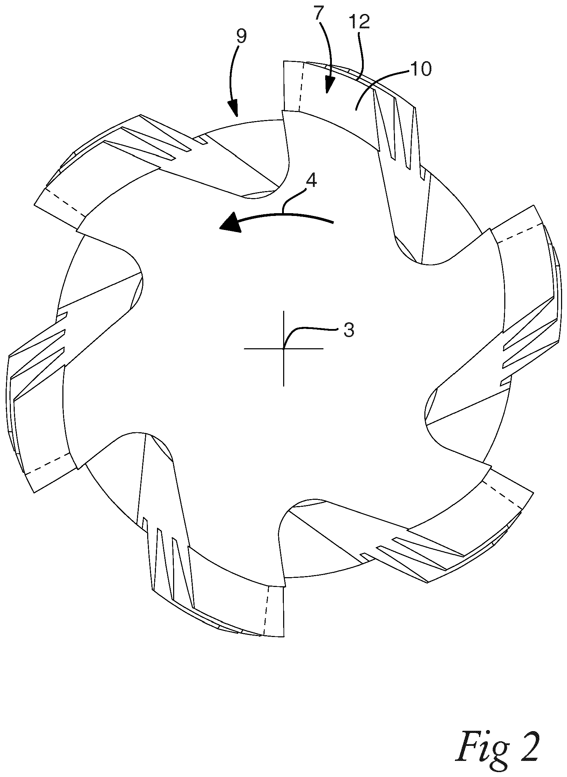

With reference to Figs. 1 - 3, a first embodiment of the thread milling cutting tool is described. The first embodiment of the thread milling cutting tool is in form of an orbital tool with neck. The tool comprises an elongated main body 1 with a front end 2, a rear end (not shown) and a central longitudinal axis 3 extending from the front end 2 to the rear end. The tool is configured to be rotatable around the axis 3 in a direction of rotation 4.

A cutting section 5 extends axially rearward from the front end 2.The cutting section 5 compromises a plurality of teeth including three sets 6 of circumferentially spaced teeth 7. Each set 6 comprises six teeth 7. Each tooth 7 of each set 6 has the same axial distance to the front end 2, wherein in Fig. 1, the axial distance 8 of the teeth 7 in a second set 6 as counted from the front end 2 is shown.

The cutting section 5 furthermore comprises six chip flutes 9 that extend axially rearward from the front end 2. Each chip flute 9 is inclined relative the longitudinal axis 3. At an angle of 15°.

Each tooth 7 of each set 6 has the shape of a ridge, which ridge extends in the circumferential direction from an associated, rotationally leading chip flute 9 to an associated, trailing chip flute 9. All teeth 7 of each set 6 are evenly spaced around the circumference, wherein the space between two circumferentially consecutive teeth 7 corresponds to the width of the chip flute 9 at the axial location of the set 6 in question. All chip flutes 9 have the same width at the same axial distance to the front end 2. In the example embodiment, all teeth 7 of all sets 6 are identical. Each chip flute 9 is an associated trailing chip flute for one of the teeth in the set 6, and an associated, leading chip flute 9 of the rotationally next following tooth 7 of the set 6.

Each ridge shaped tooth 7 has an axially forward facing front flank 10, an axially rearward facing rear flank 11 and a crest 12 connecting the two flanks. In addition, each tooth 7 comprises a portion of a root 23 that is axially directly forward thereof and a portion a root 23 that is axially rearward thereof. As seen in the axial direction, the tooth 7 extends from the center of the forward root 23 over the crest 12 and to the center of the rearward root 23. At a rotationally leading end, the ridge shaped tooth 7 has a leading face which extends radially inward of both portions of the roots 23. The leading face includes a rake surface 13.

A clearance surface 14 is located on the crest, on the flanks 10, 11 and in the roots 23. A cutting edge 15 is formed at the intersection of the rake surface 13 with the clearance surface 14. The cutting edge 15 is continuous and extends in the axial direction from the root 23 at the front end 2 over one tooth in each of the three sets 6 to the root 23 at the rear end. The thread milling cutting tool of the example embodiment comprises six such continuous cutting edges 15.

At a rationally trailing end, each tooth 7 has trailing face 18. The trailing face 18 is part of a leading surface in the trailing chip flute 9.

The clearance surface 14 comprises a leading portion 16, which follows rotationally directly behind the cutting edge 15. The clearance surface 14 furthermore comprises a trailing portion 17. In the example embodiment, the trailing portion 17 follows directly behind the leading portion 16 and extends to the trailing face 18. Therein, the clearance surface consists of the leading and trailing portion 16, 17. Both the leading and the trailing portion 16, 17, have an axial extension over a radially outer part of the front flank 10, over the crest 12 and over a radially outer part of the rear flank 11.

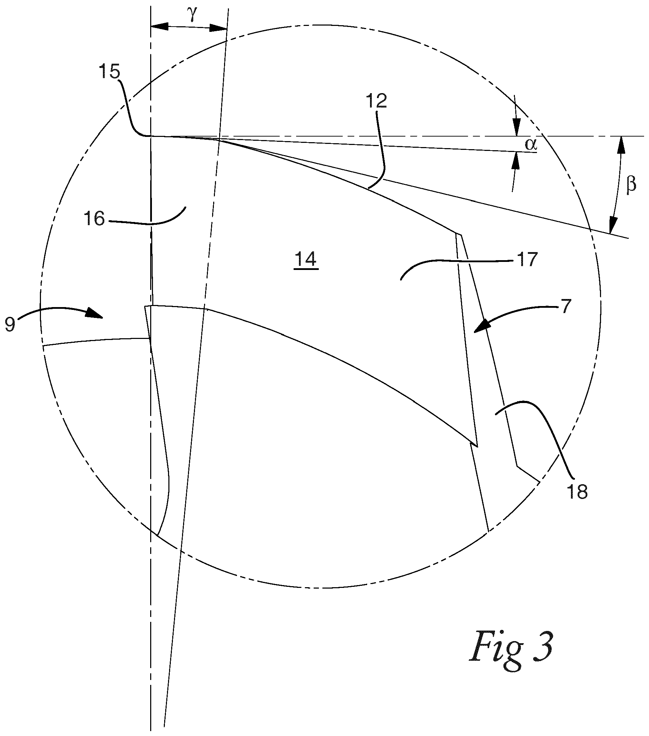

In Fig. 3, one tooth 7 of the first set of teeth 6 is shown in a cross section perpendicular to the longitudinal axis 3 of the thread milling cutting tool. As can be seen, the leading portion 16 of the clearance surface 14 has a circumferential extension in a circle sector having the longitudinal axis 3 as center. In the example embodiment, the leading portion extends in a circle sector having an angle γ of 5°.

The clearance surface 14 has a radial clearance angle. As seen in the cross section of Fig. 3, the radial clearance angle is formed by a tangent to the clearance surface and a line perpendicular to the radius at the cutting edge. In Fig. 3, the radial clearance angle is shown for two positions of the clearance surface 14 at the crest 12, wherein a first position is located in the leading portion 16 and has the radial clearance angle α, and a second portion is located in the trailing portion 17 and has the radial clearance angle β. The clearance surface 14 has the same radial clearance angle α in all positions of the leading portion 16 and same radial clearance angle β in all positions of the trailing portion 17. In the example embodiment the angle α is 2° and the angle β is 6,5°.

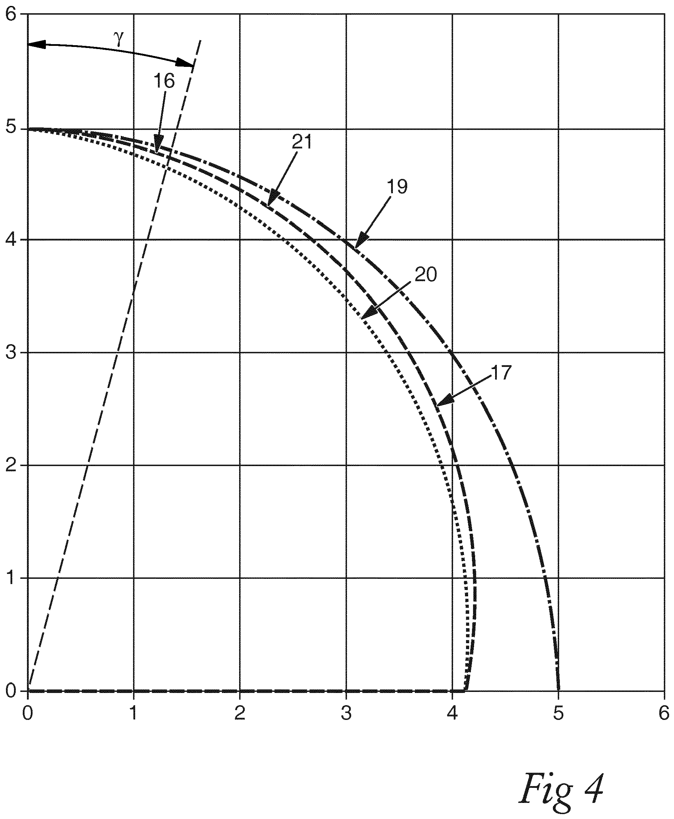

In Fig. 4, a diagram showing curves representing an embodiment of the clearance surface 14 in a reference circle 19 is shown together with a curve representing a prior art clearance surface. The reference circle 19 has the central longitudinal axis 3 as center and a radius that corresponds to a radial distance from the longitudinal axis 3 to the cutting edge 15. A first curve 21 represents the shape of the inventive clearance surface 14 as seen in a cross section perpendicular to the central longitudinal axis 3. The first curve 21 shows the clearance surface 14 comprising a leading portion 16 with a constant clearance angle α of 2° in a circle sector of angle γ of 15°, and a trailing portion 17 with a constant clearance angle β of 6,5°. A second curve 20 represents the clearance surface of a prior art tool, which clearance surface has only one, constant clearance angle of 6,5°.

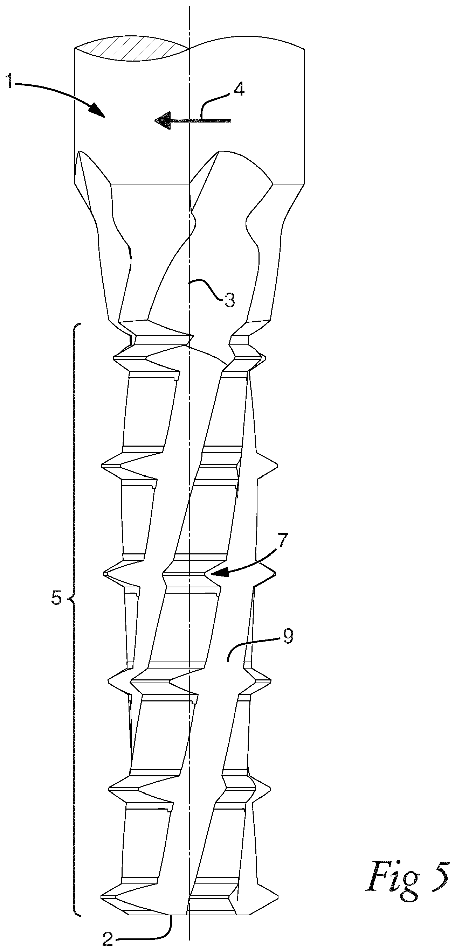

In Figs. 5 - 7 alternative embodiments of the present invention are shown, which differ from the embodiment described with reference to Figs. 1 - 3 mainly inly with respect to tool type.

Fig. 5 shows an alternative embodiment of the thread milling cutting tool in form of a interrupted teeth thread mill having six sets 6 of circumferentially spaced teeth 7, wherein each set 6 is spaced further away from each other in the axial direction than the sets of the first embodiment. The embodiment of Fig. 5 is an example of a thread milling cutting tool wherein the cutting edge 15 and the clearance surface 14 is discontinuous in the axial direction. The roots 23 forming the space between two axially consecutive teeth 7 of two axially consecutive sets 6 have central portions without cutting edge.

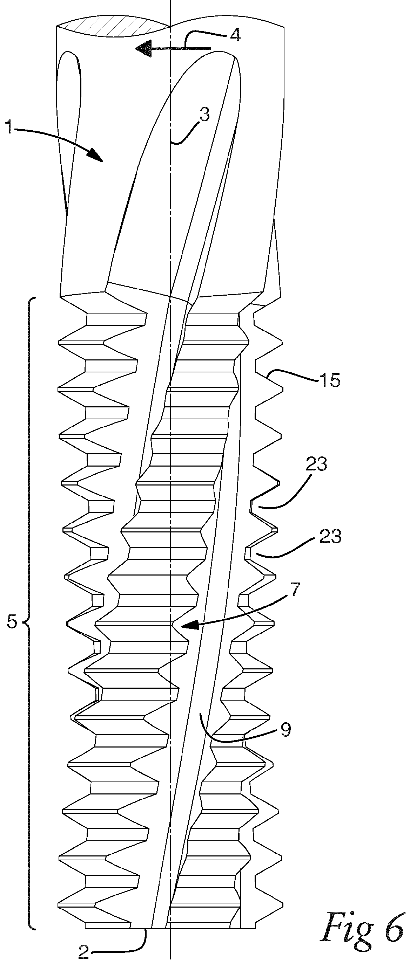

Fig. 6 shows an alternative embodiment of the thread milling cutting tool having thirteen sets 6 of circumferentially spaced teeth 7. The embodiment is an example where the inventive clearance surface 14 has been implemented on a classic thread mill.

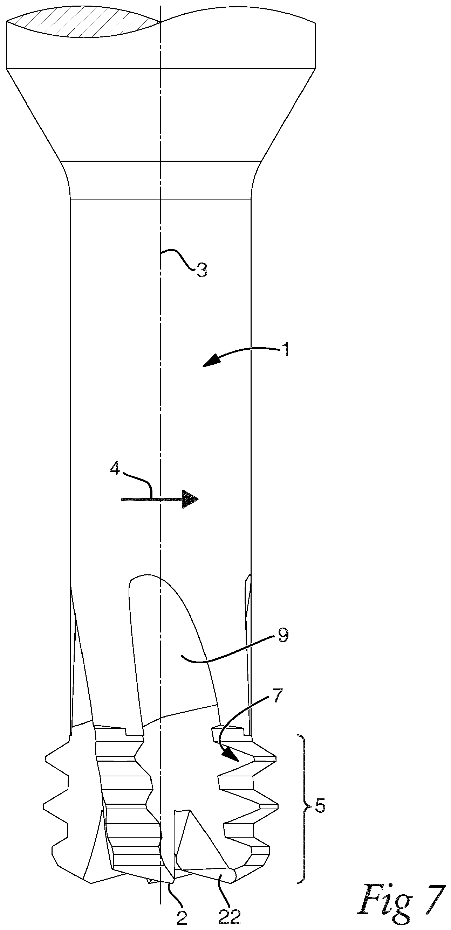

Fig. 7 shows an alternative embodiment of the thread milling cutting tool in form of an orbital thread milling drill, which comprises front end teeth 22 in addition to the circumferentially spaced teeth 7 of the sets 6. A thread milling cutting tool with front end teeth may be operated to cut both a hole and an internal thread in the hole of a workpiece at the same time.

## Claims

1. A thread milling cutting tool for metal cutting comprising an elongated main body, which main body (1)
- has a front end (2), a rear end and a central longitudinal axis (3) extending from the front end (2) to the rear end,
- is configured rotatable in a direction of rotation (4) around the central longitudinal axis (3), and
- comprises a cutting section (5) which extends axially rearward from the front end (2) and comprises a plurality of teeth (7),
wherein
- each tooth (7) of the plurality of teeth (7, 22) comprises a rake surface (13), a clearance surface (14), and a cutting edge (15) at the intersection of the rake surface (13) and the clearance surface (14), and
- the plurality of teeth (7, 22) comprises at least a first set (6) of circumferentially spaced teeth (7), wherein
- each tooth (7) of the at least first set has a same, first axial distance (8) to the front end, and
- the clearance surface (14) of each tooth (7) has a radial clearance angle,
**characterized in that**
the clearance surface (14) of each tooth (7) of the at least first set (6) of teeth comprises
a rotationally leading portion (16) and a rotationally trailing portion (17), wherein
- the leading portion (16) extends from and rotationally behind the cutting edge (15), and
- the radial clearance angle (α) of the leading portion (16) is smaller than the radial clearance angle (β) of the trailing portion (17).

2. The thread milling cutting tool as claimed in claim 1, wherein the radial clearance angle (α) of the leading portion (16) is at least 1° and less than 5°.

3. The thread milling tool as claimed in claim 2, wherein the radial clearance angle (α) of the leading portion (16) is at least 2° and at most 3°.

4. The thread milling cutting tool as claimed in any preceding claim, wherein, as seen in a cross section, the leading portion (16) has a circumferential extension in a circle sector having an angle (γ) of at least 1° and at most 15°.

5. The thread milling cutting tool as claimed in claim 4, wherein the leading portion (16) has a circumferential extension in a circle sector having an angle (γ) of at least 5° and at most 10°.

6. The thread milling cutting tool as claimed in any preceding claim, wherein the radial clearance angle (β) of the trailing portion (17) is at least 5° and at most 10°.

7. The thread milling cutting tool as claimed in claim 6, wherein the radial clearance angle (β) of the trailing portion (17) is at least 6° and at most 7°.

8. The thread milling cutting tool as claimed in any preceding claim, wherein the radial clearance angle (α, β) of both the leading portion (16) and the trailing portion (17) is constant.

9. The thread milling cutting tool as claimed in any preceding claim, wherein the clearance surface (14) consists of the leading portion (16) and the trailing portion (17).

10. The thread milling cutting tool as claimed in any preceding claim, wherein the plurality of teeth (7, 22) comprises several sets (6) of circumferentially spaced teeth (7), wherein each tooth (7) of each set (6) has the same axial distance (8) to the front end (2) as all other teeth (7) of the same set (6), and a different axial distance (8) to the front end (2) as all the teeth (7) of the other sets (6).

11. The thread milling cutting tool as claimed in claim 10, wherein the radial clearance angle (α, β) of the clearance surface (14) is the same for all teeth (7) of all sets (6) of circumferentially spaced teeth (7).

12. The thread milling cutting tool as claimed in any preceding claim, wherein the thread milling cutting tool is configured for cutting a thread with a nominal thread diameter (D) at a maximal depth (L), and wherein a ratio of the maximal depth (L) and the nominal thread diameter (L/D) is at least 2,5 and at most 5.
